# FASCICULE DE BREVET EUROPEEN

(11) **EP 0 642 633 B1**
(45) Date de publication et mention de la délivrance du brevet: **04.09.1996**
(21) Numéro de dépôt: 93910148.1
(22) Date de dépôt: 25.05.1993
(51) Int. Cl.: F16D 65/16, F16D 65/24, F16D 65/56, F16D 65/46

(54) **DISPOSITIF A COULISSEMENT ETANCHE**
DICHTGLEITENDE VORRICHTUNG
LEAKPROOF SLIDING DEVICE

(30) Priorité: 26.05.1992 FR 9206399
(43) Date de publication de la demande: 15.03.1995
(73) Titulaire: ALLIEDSIGNAL EUROPE SERVICES TECHNIQUES, 93700 Drancy (FR)
(72) Inventeur: MERY, Jean, Claude, F-93320 Pavillons-sous-Bois (FR)
(74) Mandataire: Bentz, Jean-Paul
(86) Numéro de dépôt international: FR9300500
(87) Numéro de publication internationale: WO9324762

(56) Documents cités:
- FR-A- 1 373 335
- FR-A- 2 492 488

## Description

La présente invention concerne un dispositif à coulissement étanche, comprenant un cylindre, un piston coulissant à l'intérieur de ce cylindre suivant une direction axiale, et un joint annulaire assurant une étanchéité entre le cylindre et le piston, ce dernier comportant un taraudage axial interne destiné à recevoir une vis.

Des dispositifs de ce type peuvent trouver de nombreuses applications.

Un exemple en est donné dans le brevet britannique GB 1 179 235, qui représente un piston 69 coulissant dans un cylindre 45 de façon étanche grâce à un joint 65, le piston étant pourvu d'un taraudage axial pour recevoir une vis 48.

Les dispositifs connus de ce type, dans lesquels le piston est formé d'une seule pièce et comporte un trou borgne taraudé, peuvent en pratique soulever des difficultés de fabrication importantes, liées au fait que le taraudage du piston, en particulier lorsque le filet correspondant présente un pas de longueur importante, ne peut être effectué jusqu'au fond du trou borgne.

Il en résulte nécessairement une perte de matière et un encombrement relativement important, que l'invention vise précisément à éliminer.

A cette fin, le dispositif de l'invention est caractérisé en ce que le piston est essentiellement formé par un manchon cylindrique portant ledit taraudage, et par un couvercle fermant le manchon et rendu solidaire de ce dernier par une liaison annulaire, et en ce que le joint est porté par le couvercle.

Dans une forme de réalisation simple de ce dispositif, la liaison annulaire pourra être simplement constituée par un filetage du piston ou du manchon, et un taraudage correspondant de l'autre pièce.

Le dispositif est notamment applicable à la réalisation optimisée de moteurs de freins à réglage automatique limité en pression, du type de ceux qui requièrent le recours aux éléments énoncés dans le préambule de la présente description.

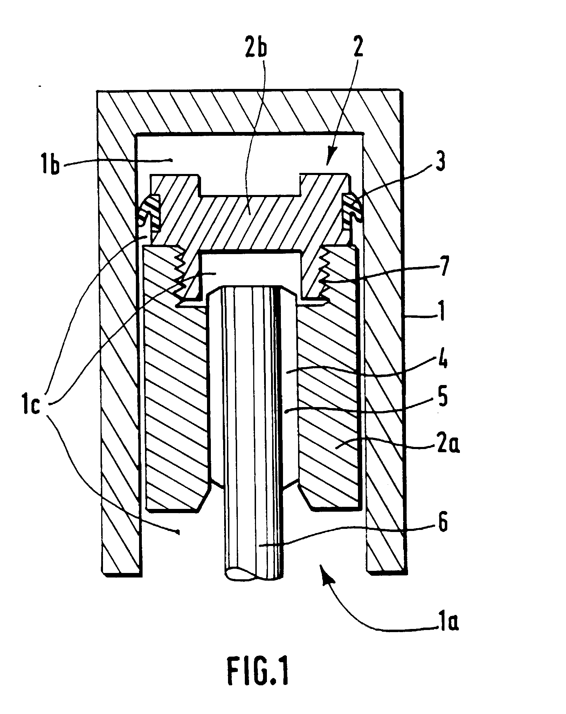

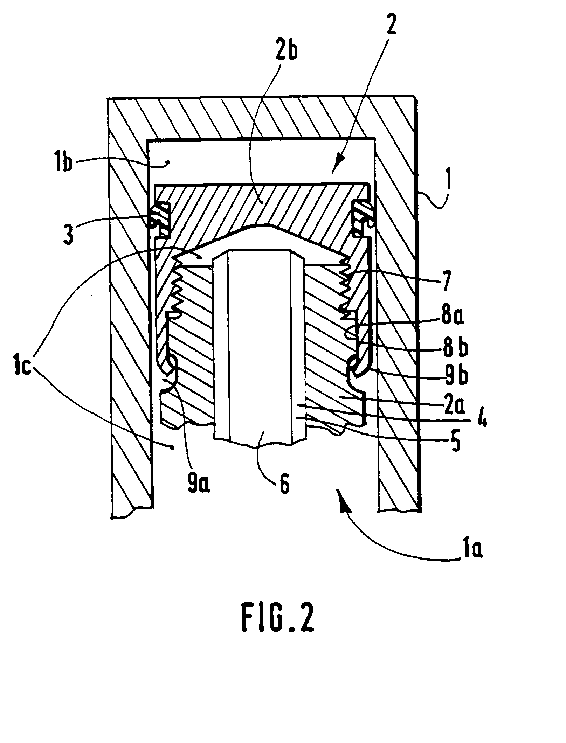

D'autres caractéristiques de l'invention ressortiront de la description qui en est faite ci-après, à titre indicatif et nullement limitatif, en référence au dessin annexé dont les figures 1 et 2 sont deux vues en coupe d'un dispositif conforme à l'invention, selon deux modes de réalisation différents.

Un tel dispositif comprend un cylindre 1 à l'intérieur duquel coulisse un piston 2 de façon étanche grâce à la présence d'un joint annulaire 3.

Le piston 2 présente un taraudage axial 4 recevant le filetage complémentaire 5 d'une vis 6.

Selon l'invention, le piston est formé d'un manchon cylindrique 2a et d'un couvercle 2b, reliés l'un à l'autre par un pas de vis 7.

Le couvercle 2b ferme axialement le manchon 2a et porte le joint annulaire 3 pour cloisonner le cylindre 1 de façon étanche et y définir deux chambres 1b et 1c susceptibles d'être portées à des pressions différentes, de sorte que l'étanchéité du pas de vis 7 est assurée par l'intermédiaire du joint 3 qui se trouve en aval de ce pas de vis par rapport à l'entrée la du cylindre, et ne requiert donc le recours à aucun autre moyen.

Par ailleurs, comme le manchon 2a est ouvert à ses deux extrémités, il peut sans problème être traversé de part en part par le taraud au moment de sa fabrication, donc être taraudé sur toute sa longueur interne.

Comme le montre la Figure 2, il peut être avantageux, pour obtenir un centrage optimal du couvercle 2b sur la manchon 2a, ce dont résulte une étanchéité optimale du joint 3, de guider le couvercle sur le manchon au moyen de deux surfaces cylindriques exactement complémentaires 8a, 8b, respectivement prévues sur le manchon et sur le couvercle.

Par ailleurs, ce dernier peut être serti sur le manchon, pour devenir indévissable, par restriction du diamètre de la surface de guidage 8b, dans sa zone terminale 9b, vers l'intérieur d'une gorge annulaire 9a du manchon.

## Revendications

1. Dispositif à coulissement étanche, comprenant un cylindre (1), un piston (2) coulissant à l'intérieur de ce cylindre suivant une direction axiale, et un joint annulaire (3) assurant une étanchéité entre le cylindre et le piston, ce dernier comportant un taraudage axial interne (4) destiné à recevoir une vis (6), caractérisé en ce que le piston est essentiellement formé par un manchon cylindrique (2a) portant ledit taraudage, et par un couvercle (2b) fermant le manchon et rendu solidaire de ce dernier par une liaison annulaire (7), et en ce que le joint (3) est porté par le couvercle (2b).

2. Dispositif suivant la revendication 1, caractérisé en ce que ladite liaison annulaire (7) comprend un filetage.

3. Dispositif suivant l'une quelconque des revendications précédentes, caractérisé en ce que le couvercle et le manchon comportent des surfaces de guidage cylindriques complémentaires (8a, 8b).

4. Dispositif suivant l'une quelconque des revendications précédentes, caractérisé en ce que le couvercle est serti sur le manchon.

5. Dispositif suivant l'une quelconque des revendications précédentes, caractérisé en ce qu'il est intégré à un moteur de frein à réglage automatique.

## Patentansprüche

1. Vorrichtung, welche in dichter Weise verschiebbar ist und einen Zylinder (1), einen im Inneren des Zylinders entlang einer axialen Richtung gleitenden Kolben (2) und eine ringförmige Dichtung (3) enthält, welche eine Dichtigkeit zwischen dem Zylinder und dem Kolben gewährleistet, wobei der Kolben ein axiales Innengewinde enthält, welches dafür vorgesehen ist, eine Schraube (6) aufzunehmen, dadurch gekennzeichnet, daß der Kolben im wesentlichen durch eine zylindrische Hülse (2a) gebildet ist, welche das Gewinde trägt, und durch einen Deckel (2b), welcher die Hülse schließt und fest mit dieser durch eine ringförmige Verbindung (7) verbunden ist, und daß die Dichtung (3) von dem Deckel (2b) getragen ist.

2. Vorrichtung nach Anspruch 1, dadurch gekennzeichnet, daß die ringförmige Verbindung (7) ein Gewinde enthält.

3. Vorrichtung nach einem der vorhergehenden Ansprüche, dadurch gekennzeichnet, daß der Deckel und die Hülse zueinander komplementäre zylindrische Führungsflächen (8a, 8b) aufweisen.

4. Vorrichtung nach einem der vorhergehenden Ansprüche, dadurch gekennzeichnet, daß der Deckel auf der Hülse verstemmt ist.

5. Vorrichtung nach einem der vorhergehenden Ansprüche, dadurch gekennzeichnet, daß sie in eine Bremsbetätigungsvorrichtung mit automatischer Regulierung integriert ist.

## Claims

1. Leaktight sliding device, comprising a cylinder (1), a piston (2) sliding inside this cylinder in an axial direction, and an annular seal (3) ensuring leak-tightness between the cylinder and the piston, the latter comprising an internal axial tapping (4) designed to receive a screw (6), characterized in that the piston is essentially formed by a cylindrical sleeve (2a) bearing said tapping, and by a cap (2a) closing the sleeve and rendered integral with the latter by an annular connection (7), and in that the seal (3) is borne by the cap (2b).

2. Device according to Claim 1, characterised in that said annular connection (7) comprises a thread.

3. Device according to any of the preceeding claims, characterised in that the cap and the sleeve comprise complementary cylindrical guiding surfaces (8a, 8b).

4. Device according to any of the preceeding claims, characterised in that the cap is crimped onto the sleeve.

5. Device according to any of the preceeding claims, characterized in that it is built in a brake actuator with automatic adjustment.
